# DEMANDE DE BREVET EUROPEEN

(11) **EP 1 440 647 A1**
(43) Date de publication de la demande: **28.07.2004**
(21) Numéro de dépôt: 03447015.3
(22) Date de dépôt: 21.01.2003
(51) Int. Cl.: A47J 41/02

(54) **Récipient isolant**

(71) Demandeur: Hovac Belgium NV, 1930 Zaventem (BE)
(72) Inventeur: Dejardin, Serge, 1332 Genval (BE); Alblas, Raoul, 4834 VK Breda (NL)
(74) Mandataire: Schmitz, Yvon

(57) **Abrégé**

Récipient isolant comprenant une ampoule isolante (1), une gaine externe (2) pour la protection de l'ampoule, des moyens (3) prévus pour immobiliser cette dernière dans ladite gaine et des moyens (4) pour réaliser l'étanchéité entre l'ampoule isolante et sa gaine, les moyens (3) prévus pour immobiliser l'ampoule (1) susdite dans sa gaine (2) étant agencés au niveau du col (5) de l'ampoule isolante et au niveau correspondant de la gaine précitée de manière à ce que l'ampoule soit immobilisée dans cette dernière en position suspendue.

## Description

La présente invention a pour objet un récipient isolant destiné à conserver son contenu à une température voisine de celle à laquelle on l'y a introduit, tel que bouteille isolante pour le transport de boissons, pichet ou canette isolante de table, canette à pompe pour le débit de liquide, porte aliments destiné au transport de ces derniers, etc., ledit récipient comprenant une ampoule isolante, une gaine externe pour la protection de l'ampoule et dont la section transversale est supérieure à celle de l'ampoule, des moyens prévus pour immobiliser cette dernière sensiblement coaxialement dans ladite gaine et des moyens pour réaliser l'étanchéité entre l'ampoule isolante et sa gaine.

Pour la fabrication de ce type de récipient bien connu, les problèmes à résoudre sont de deux ordres, à savoir : immobilisation de l'ampoule coaxialement par rapport à sa gaine pour que cette dernière puisse assumer son rôle de protection de l'ampoule et l'étanchéité entre cette dernière et la gaine, par compression d'un joint souple entre l'ouverture du goulot de l'ampoule et la gaine, pour éviter que le contenu de l'ampoule se déverse dans l'espace compris entre ladite ampoule et sa gaine.

Dans les récipients isolants connus, quel que soit le mode de l'introduction de l'ampoule susdite dans sa gaine par la base ou le sommet de cette dernière, on assure l'immobilisation et l'étanchéité précitées en appliquant l'extrémité du col de l'ampoule sur la gaine, avec interposition du joint élastique susdit, et en exerçant une pression, suivant son axe, sur l'ampoule isolante lors de l'assemblage de la gaine.

Dans des récipients connus, lorsque l'ampoule isolante est introduite par la base de la gaine, la pression axiale susdite sur l'ampoule est exercée en vissant le fond de la gaine qui est profilé pour s'appliquer sur le fond de l'ampoule. Comme, en général, les ampoules isolantes ont une tolérance, quant à leur hauteur, qui peut atteindre 10 mm et qu'il n'est pas possible d'utiliser un joint élastique ayant une épaisseur telle qu'il permettrait de compenser cette tolérance, il est nécessaire de visser plus ou moins le fond sur la gaine afin d'atteindre la pression axiale susdite immobilisant l'ampoule dans la gaine et assurant l'étanchéité entre cette dernière et l'ampoule; ce qui présente l'inconvénient d'obtenir des récipients dont les hauteurs varient sensiblement.

Pour remédier à cet inconvénient, on a pensé, sur ce type de récipient et pour obtenir des récipients de hauteur constante, à compenser la tolérance de l'ampoule en utilisant soit une vis de pression, soit un ressort associé au fond de la gaine et agencé, pour une position donnée dudit fond, de manière soit à pouvoir régler, soit à assurer la pression nécessaire sur le fond de l'ampoule pour obtenir l'immobilisation précitée de cette dernière ainsi que l'étanchéité susdite. Ces solutions présentent aussi leurs inconvénients, à savoir : augmentation, d'une part, du coût de l'outillage nécessaire à la fabrication de la gaine et, d'autre part, de la main-d'oeuvre pour l'assemblage du récipient.

Dans les récipients connus où l'ampoule isolante est introduite par la partie supérieure de la gaine à fond fixe, une épaule destinée à obturer cette partie supérieure présente un bossage destiné à prendre appui sur l'ampoule, autour du col de celle-ci, et agencé pour exercer la pression axiale précitée sur la partie supérieure de l'ampoule lors du vissage de l'épaule sur la gaine. Ces récipients présentent l'inconvénient de nécessiter des composants de gaine très rigides afin que la gaine résiste, sans déformation, lorsque la pression axiale susdite est exercée sur l'ampoule isolante pour assurer son immobilisation dans la gaine et l'étanchéité entre cette dernière et l'ampoule.

Enfin, les récipients connus décrits ci-avant présentent tous l'inconvénient majeur de réduire la résistance mécanique de l'ampoule isolante en soumettant celle-ci à une compression axiale sur toute sa hauteur.

L'invention a pour but de remédier à ces divers inconvénients et de procurer un récipient isolant présentant, par rapport aux récipients connus, les avantages suivants :
- la résistance mécanique de l'ampoule isolante est considérablement améliorée du fait, d'une part, qu'elle ne subit plus de compression axiale sur toute sa hauteur et, d'autre part, que les seules contraintes exercées sur ladite ampoule le sont au niveau de son col, c'est-à-dire à l'endroit où elle est la plus résistante,
- les tolérances techniques dues à la hauteur de l'ampoule isolante ne doivent plus être prises en compte ni pour obtenir son immobilisation dans sa gaine, ni pour réaliser l'étanchéité entre cette dernière et l'ampoule,
- la simplification des composants du récipient suivant l'invention permet de réduire le coût des outillages nécessaires à sa fabrication et,
- la simplification de l'assemblage desdits composants permet soit de réduire le coût de la main-d'oeuvre nécessaire au montage, soit l'automatisation de ce dernier.

A cet effet, suivant l'invention, les moyens prévus pour immobiliser l'ampoule susdite dans sa gaine sont agencés au niveau du col de l'ampoule isolante et/ou au niveau correspondant de la gaine précitée de manière à ce que l'ampoule soit immobilisée dans cette dernière en position suspendue.

Suivant une forme de réalisation avantageuse de l'objet de l'invention, la dimension de la gaine susdite, prise parallèlement à son axe, est déterminée pour que la distance qui sépare le fond de l'ampoule isolante du fond de la gaine soit au moins légèrement supérieure à la tolérance maximale en hauteur admise pour l'ampoule lors de sa fabrication.

Suivant un mode de réalisation particulièrement avantageux de l'objet de l'invention, les moyens prévus pour immobiliser l'ampoule isolante dans sa gaine comprennent essentiellement une jupe présentée par ladite gaine, coaxialement à cette dernière, et agencée pour coopérer avec le col de l'ampoule sur au moins une partie importante de la hauteur de ce dernier.

D'autres détails et particularités de l'invention ressortiront de la description des dessins annexés au présent mémoire et qui représentent, à titre non limitatif, deux formes de réalisation particulières du récipient isolant suivant l'invention.

La figure 1 est une vue en élévation, avec brisures partielles, d'un récipient isolant suivant l'invention.

La figure 2 est une vue analogue à la figure 1 et représente une variante du récipient montré à ladite figure 1.

Dans les différentes figures, les mêmes notations de référence désignent des éléments identiques ou analogues.

Le récipient isolant suivant l'invention et illustré aux dessins est destiné notamment à conserver son contenu à une température voisine de la température à laquelle il a été introduit dans ledit récipient. Ce dernier comprend une ampoule isolante 1 du type vase de Dewar, une gaine externe 2 pour la protection de l'ampoule qui a une section transversale supérieure à celle de l'ampoule et qui est coaxiale à cette dernière, des moyens 3 agencés pour immobiliser l'ampoule dans la gaine 2 en position coaxiale par rapport à cette dernière ainsi que des moyens 4 agencés pour réaliser l'étanchéité entre l'ampoule 1 et sa gaine 2.

Suivant l'invention et comme montré aux dessins, les moyens 3 prévus pour immobiliser l'ampoule 1 dans sa gaine de protection 2 sont agencés, d'une part, au niveau du col 5 de l'ampoule isolante et, d'autre part, au niveau correspondant, en 6, de la gaine 2 afin que ladite ampoule 1 soit immobilisée, dans celle-ci, en position suspendue.

Pour éviter tout contact du fond 7 de l'ampoule 1 avec le fond 8 de la gaine 2, la hauteur de cette dernière est déterminée pour que la distance 9, qui sépare lesdits fonds 7 et 8, soit au moins légèrement supérieure à la tolérance maximale en hauteur admise pour l'ampoule 1 au cours de sa fabrication.

Les moyens 3 agencés pour immobiliser l'ampoule isolante 1, en position suspendue, dans sa gaine de protection 2 comprennent une jupe 10 ménagée dans cette gaine coaxialement à celle-ci. Cette jupe 10 est agencée pour coopérer avec le col 5 de l'ampoule 1 sur au moins une partie importante de la hauteur de ce col.

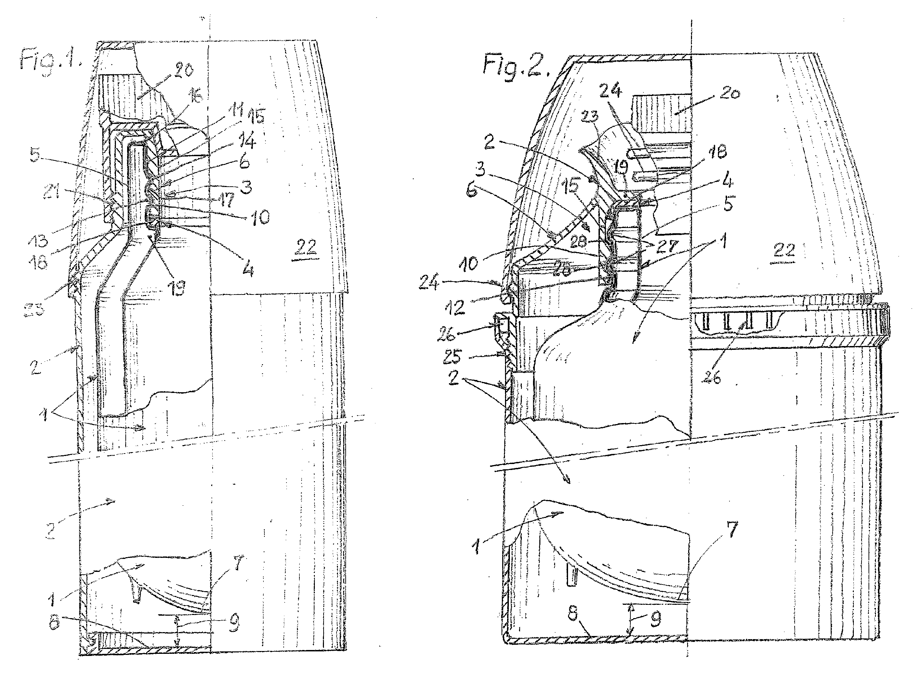

Dans la forme de réalisation du récipient isolant suivant l'invention, illustrée à la figure 1, la jupe 10 présentée par la gaine 2 coopère avec la face interne 11 du col 5 de l'ampoule isolante 1.

Cette gaine 2 est réalisée en deux parties, une première partie couvrant le col 5 et les parois latérales de l'ampoule 1 et comprenant la jupe 10 susdite et une seconde partie constituant le fond 8 de la gaine 2 qui s'emboîte à la base de la première partie. L'ampoule 1 est introduite dans la gaine par cette base.

Les moyens 3 précités comprennent un filet 13, ménagé sur la face interne 11 dudit col 5, coopérant avec un filet 14 correspondant ménagé sur la face externe 16 de la jupe 10, ledit col 5 étant vissé à l'extérieur de la jupe afin que l'ampoule isolante 1 soit automatiquement immobilisée dans sa gaine protectrice 2, en position suspendue. Les moyens 4 qui assurent l'étanchéité entre l'ampoule isolante 1 et sa gaine 2 sont constitués par un joint annulaire élastique 18 qui est comprimé entre la base de la jupe 10 précitée et un rebord 19 présenté par l'ampoule isolante 1 lorsque le col 5 de l'ampoule est vissé sur ladite jupe 10. Le récipient isolant est fermé par un bouchon 20 qui se visse, en 21, sur la gaine 2 et qui est surmonté par un gobelet 22 qui se visse également sur la gaine, en 23.

Dans la forme de réalisation du récipient isolant suivant l'invention et illustré à la figure 2, la gaine de protection 2 de l'ampoule isolante 1 est réalisée en deux parties, une première partie cylindrique comprenant le fond 8 de la gaine et la paroi destinée à entourer l'ampoule jusqu'au niveau de la base de son col 5 et une seconde partie qui est profilée pour couvrir ce col et former la jupe 10 précitée, un bec verseur 23 et des moyens 24 destinés à coopérer avec le bouchon de fermeture 20 du récipient et avec le gobelet 22 de celui-ci. L'ampoule 1 est introduite dans la gaine 2 par le sommet de la première partie de cette dernière après que ladite ampoule 1 a été assemblée, grâce aux moyens 3 précités, à la jupe 10 présentée par la seconde partie; cette dernière étant assemblée à la première partie par vissage ou clipsage, en 25. Des moyens 26, tels que des languettes de guidage régulièrement réparties sur le pourtour de la seconde partie de la gaine, sont avantageusement prévus à l'endroit d'assemblage, pour faciliter la mise en place des deux parties de gaine l'une par rapport à l'autre lors de leur assemblage et pour renforcer et rigidifier la gaine 2, au niveau dudit assemblage. Le col 5 de l'ampoule isolante 1 coopère, par sa force externe 12, avec la face interne 15 de la jupe 10 pour l'immobilisation dudit col par rapport à la jupe, les moyens 3 précités comprenant deux saillies annulaires 27 ménagées sur la face externe 12 du col 5 de l'ampoule et deux rainures annulaires correspondantes 28 ménagées sur la face interne 15 de la jupe 10. L'assemblage de l'ampoule 1 à la jupe 10 s'effectue en exerçant simplement une pression axiale sur la jupe susdite et sur l'ampoule dont le col est engagé à l'intérieur de cette jupe. Les moyens 4 réalisant l'étanchéité entre l'ampoule 1 et la gaine 2 sont constitués, d'une part, par un joint annulaire élastique 18 agencé pour épouser, en le coiffant, le bord du col 5 de l'ampoule 1 et, d'autre .part, un rebord périphérique 19 présenté par la jupe 10 susdite, les saillies annulaires 27 du col de l'ampoule et les rainures 28 correspondantes de la jupe 10 étant agencées pour que le joint 18 soit automatiquement comprimé et réalise l'étanchéité susdite lorsque les saillies 27 sont engagées dans les rainures 28 de la jupe.

Il doit être entendu que l'invention n'est nullement limitées aux formes de réalisation décrites et que bien des modifications peuvent être apportées à ces dernières sans sortir du cadre du présent brevet.

## Revendications

1. Récipient isolant notamment destiné à conserver son contenu à une température voisine de celle à laquelle on l'y a introduit et comprenant une ampoule isolante (1), une gaine externe (2) pour la protection de l'ampoule et dont la section transversale est supérieure à celle de l'ampoule, des moyens (3) prévus pour immobiliser cette dernière sensiblement coaxialement dans ladite gaine et des moyens (4) pour réaliser l'étanchéité entre l'ampoule isolante et sa gaine, ledit récipient isolant étant **caractérisé en ce que** les moyens prévus (3) pour immobiliser l'ampoule (1) susdite dans sa gaine (2) sont agencés au niveau du col (5) de l'ampoule isolante et/ou au niveau correspondant de la gaine précitée de manière à ce que l'ampoule soit immobilisée dans cette dernière en position suspendue.

2. Récipient isolant suivant la revendication 1, **caractérisé en ce que** la dimension de la gaine (2) susdite, prise parallèlement à son axe, est déterminée pour que la distance qui sépare le fond (7) de l'ampoule isolante (1) du fond (8) de la gaine soit au moins légèrement supérieure à la tolérance maximale en hauteur admise pour l'ampoule lors de sa fabrication.

3. Récipient isolant suivant l'une ou l'autre des revendications 1 et 2, **caractérisé en ce que** les moyens (3) prévus pour immobiliser l'ampoule isolante (1) dans sa gaine (2) comprennent essentiellement une jupe (10) présentée par ladite gaine, coaxialement à cette dernière, et agencée pour coopérer avec le col (5) de l'ampoule sur au moins une partie importante de la hauteur de ce dernier.

4. Récipient isolant suivant la revendication 3, **caractérisé en ce que** la jupe (10) susdite coopère avec la face externe (12) du col (5) de l'ampoule isolante (1).

5. Récipient isolant suivant la revendication 3, **caractérisé en ce que** la jupe (10) précitée coopère avec la face interne (11) du col (5) de l'ampoule isolante.

6. Récipient isolant suivant l'une quelconque des revendications 3 à 5, **caractérisé en ce que** les moyens précités (3) prévus pour immobiliser l'ampoule isolante (1) dans sa gaine (2) comprennent, d'une part, au moins une saillie annulaire (27) ou des portions d'au moins une saillie annulaire régulièrement réparties ménagées soit sur la face interne (11) ou externe (12) du col (5) de l'ampoule, soit sur la face interne (15) ou externe (16) de la jupe précitée et, d'autre part, une rainure annulaire (28) correspondante ménagée respectivement soit sur la face externe (16) ou interne (15) de la jupe (10) susdite, soit sur la face externe (12) ou interne (11) du col de l'ampoule isolante, la saillie (27) ou portion de saillie étant engagées par pression dans la rainure (28) pour immobiliser le col (5) de l'ampoule par rapport à la jupe (10) présentée par la gaine.

7. Récipient isolant suivant l'une quelconque des revendications 3 à 5, **caractérisé en ce que** les moyens (3) précités prévus pour immobiliser l'ampoule isolante (1) dans sa gaine (2) comprennent, d'une part, un filet (14) ou une portion de filet ménagé soit sur la face interne (11) ou externe (12) du col (5) de l'ampoule, soit sur la face interne (15) ou externe (16) de la jupe (10) susdite et, d'autre part, un filet (17) correspondant ménagé respectivement soit sur la face externe (16) ou interne (15) de la jupe précitée, soit sur la face externe (12) ou interne (11) du col (5) de l'ampoule, ce dernier étant vissé sur la jupe (10) pour que l'ampoule soit immobilisée dans sa gaine (2) en position suspendue.

8. Récipient isolant suivant l'une quelconque des revendications 3 à 7, **caractérisé en ce que** les moyens (4) précités destinés à réaliser l'étanchéité entre l'ampoule isolante (1) et sa gaine (2) sont constitués, d'une part, par un joint annulaire élastique (18) agencé pour épouser, en le coiffant, le bord du col (5) de l'ampoule et, d'autre part, par un rebord (19) présenté par la jupe (10) susdite faisant partie de la gaine (2) et agencé pour comprimer automatiquement le joint annulaire élastique précité lorsque le col (5) de l'ampoule est fixé sur la jupe.

9. Récipient isolant suivant l'une quelconque des revendications 3 à 8, **caractérisé en ce que** la gaine (2) susdite est réalisée en deux parties, une première partie cylindrique comprenant le fond (8) de la gaine et la paroi entourant l'ampoule isolante (1) jusqu'au niveau de la base du col (5) de cette dernière et une seconde partie, qui se fixe sur la première et qui est profilée pour couvrir le col (5) de l'ampoule et former la jupe (10) précitée, l'ouverture du récipient, un éventuel bec verseur (23) et des moyens (24) destinés à recevoir le système de fermeture (20, 22) du récipient.

10. Récipient isolant suivant la revendication 9, **caractérisé en ce que** les deux parties de la gaine sont agencées pour être assemblées par vissage (en 25), des moyens (26) étant prévus sur la seconde partie et agencés à l'endroit d'assemblage de manière, d'une part, à faciliter la mise en place correcte des deux parties l'une par rapport à l'autre lors de leur assemblage et d'autre part, à rigidifier la gaine précitée, notamment au voisinage dudit assemblage.
